(19) Europäisches Patentamt / European Patent Office / Office européen des brevets

(11) **EP 4 607 298 A1**

(12) **EUROPEAN PATENT APPLICATION**

(43) Date of publication:
27.08.2025 Bulletin 2025/35

(21) Application number: 24159178.3

(22) Date of filing: **22.02.2024**

(51) International Patent Classification (IPC):
**G05B 19/042** (2006.01)    **G05B 9/03** (2006.01)

(52) Cooperative Patent Classification (CPC):
**G05B 19/0428; G05B 9/03**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **CODESYS Holding GmbH**
**87439 Kempten (DE)**

(72) Inventor: **Hornberger, Ingo**
**87616 Marktoberdorf (DE)**

(74) Representative: **Lucke, Andreas**
**Boehmert & Boehmert**
**Anwaltspartnerschaft mbB**
**Pettenkoferstrasse 22**
**80336 München (DE)**

(54) **DATA TRANSFORMATION AND RETRANSFORMATION FOR SAFETY APPLICATIONS IN AN INDUSTRIAL CONTROL SYSTEM**

(57) The disclosure relates to an industrial control system comprising a first data channel unit, the first data channel unit being adapted to receive first input data and a diagnosis code, and further adapted to transform the first input data into first transformed data by means of an invertible transformation function employing the diagnosis code; a second data channel unit, the second data channel unit being adapted to receive second input data and the diagnosis code, and further adapted to transform the second input data into second transformed data by means of the invertible transformation function employing the diagnosis code; and a retransformation unit, the retransformation unit being adapted to receive the first transformed data and the diagnosis code from the first data channel unit and further adapted to receive the second transformed data from the second data channel unit. The retransformation unit is adapted to convert the first transformed data into first output data employing an inverse function of the invertible transformation function, wherein the inverse function employs the diagnosis code. The retransformation unit is further adapted to convert the second transformed data into second output data employing the inverse function, wherein the inverse function employs the diagnosis code.

Fig. 2

## Description

Technical Field

The present disclosure relates to the field of industrial control, and in particular to techniques for data transformation and retransformation an industrial controller units for safety applications.

Background

Industrial control programs may run on industrial control systems for real-time control of industrial processes, such as control of machinery, chemical plants or other factory environments. Industrial control programs are usually written in a high-level programming language in a programming environment, are compiled and then stored and run on an industrial controller unit that directly controls an associated machinery or industrial process.

In many practically relevant scenarios, the operation of the machinery or industrial process is safety-critical, as its operation may potentially be harmful to the operating personnel and/or the environment. It is then advisable or even legally required to take measures that reduce the risk of a malfunction of the industrial control system, or at least reduce the impact of such a malfunction on the controlled machinery or industrial process. Redundancy has been employed in the prior art to enhance the operational safety, such as by operating a plurality of industrial controller units in parallel, and sending commands to the associated machinery or industrial process only if the outputs of the plurality of industrial controller units coincide. Techniques that employ software encoded processing for redundantly executing native code are described in EP 4 242 847 A2.

Summary

In view of the prior art, there remains a need for operating techniques for an industrial control system that are computationally efficient and slim while guaranteeing a high level of operational safety.

This objective is achieved with an industrial control system according to independent claim 1 and a method for operating an industrial control system according to independent claim 8. The dependent claims relate to optional embodiments.

In a first aspect, the present disclosure relates to an industrial control system comprising a first data channel unit, the first data channel unit being adapted to receive first input data and a diagnosis code, and further adapted to transform the first input data into first transformed data by means of an invertible transformation function employing the diagnosis code; a second data channel unit, the second data channel unit being adapted to receive second input data and the diagnosis code, and further adapted to transform the second input data into second transformed data by means of the invertible transformation function employing the diagnosis code; and a retransformation unit, the retransformation unit being adapted to receive the first transformed data and the diagnosis code from the first data channel unit and further adapted to receive the second transformed data from the second data channel unit. The retransformation unit is adapted to convert the first transformed data into first output data employing an inverse function of the invertible transformation function, wherein the inverse function employs the diagnosis code. The retransformation unit is further adapted to convert the second transformed data into second output data employing the inverse function, wherein the inverse function employs the diagnosis code.

The industrial control system according to the disclosure may rely on two data channel units to transform the first input data and the second input data into first transformed data and second transformed data by means of an invertible transformation function employing a diagnosis code. The retransformation unit may be adapted to re-transform the first transformed data and the second transformed data into the first input data and the second input data, respectively, by means of the inverse function of the invertible transformation function, wherein the inverse function likewise employs the diagnosis code.

The retransformation unit receives the first transformed data and the second transformed data from the first data channel unit and the second data channel unit, respectively. Hence, the industrial control system may be implemented as a Y-shaped gate, wherein a first data channel and a second data channel are merged into a retransformation data channel. Given that the inverse function may employ the diagnosis code received from the first data channel unit, the retransformation unit may reliably reveal computational or data processing errors that may occur in the first data channel unit or the second data channel unit. In response to such computational or data processing errors being detected, the industrial control system may be adapted to switch the controlled industrial process into a safe state.

The first data channel unit and/or the second data channel unit may both form part of an industrial controller unit adapted to run an industrial control program, such as a compiled industrial control program.

The first input data may be first control data. The first control data may be computed or generated by an industrial controller unit and may be adapted to control an associated industrial process.

Similarly, the second input data may be second control data. The second control data may be computed or generated by an industrial controller unit, possibly the same industrial controller unit that computed or generated the first control data, and may be adapted to control an associated industrial process.

In some embodiments, the first input data may coincide with the second input data.

In other embodiments, the first input data may be at least partially different from the second input data.

For instance, the first input data and the second input data may each comprise telegram data and check data. The telegram data may comprise payload data adapted to control the associated industrial process. The check data may comprise meta data such as a checksum, and/or communication protocol data.

In some embodiments, the first input data and the second input data may coincide in their telegram data, but may at least partially differ in their check data.

In some embodiments, as a result of a successful transformation and retransformation the first output data may coincide with the first input data.

Similarly, as a result of a successful transformation and retransformation the second output data may coincide with the second input data.

In some embodiments, control of the associated industrial process may require both the first input data and the second input data, such as a merge of the first input data and the second input data.

According to an embodiment, the retransformation unit is adapted to supply the first output data and the second output data to an industrial control network, in particular to a fieldbus network, such as a fieldbus network connected to the controlled industrial process.

According to an embodiment, the retransformation unit may be adapted to verify the first output data and/or the second output data, in particular before supplying the first output data and/or the second output data to the industrial control network.

Verifying the first output data and the second output data may comprise checking whether the first output data and/or the second output they correspond to valid communication or fieldbus commands or comply with a corresponding communication or fieldbus protocol.

In case the check reveals that the first output data and/or the second output data do not correspond to valid commands or do not comply with a corresponding protocol, the industrial control system may switch the controlled process into a safe state.

In other embodiments, it may be the industrial control network, such as a fieldbus network, that verifies the first output data and/or the second output data.

In some embodiments, the retransformation unit may be adapted to generate merged output data from the first output data and the second output data, in particular by xor-ing the first output data and the second output data and/or by summing the first output data and the second output data.

The retransformation unit may be adapted to supply the merged output data to an industrial control network, in particular to a fieldbus network.

According to an embodiment, the retransformation unit may be adapted to verify the merged output data, in particular before supplying the merged output data to the industrial control network.

Verifying the merged output data may comprise checking whether the merged output data correspond to valid communication or fieldbus commands, or comply with a corresponding communication or fieldbus protocol.

In case the check reveals that the merged output data do not correspond to valid communication or fieldbus commands or do not comply with a corresponding communication or fieldbus protocol, the industrial control system may switch the controlled process into a safe state.

In other embodiments, it may be the industrial control or fieldbus network that verifies the merged output data.

In the context of the present disclosure, any invertible transformation function may be employed in the first data channel unit and the second data channel unit.

According to some embodiments, the invertible transformation function comprises or is an or function and/or an xor function and/or a checksum function, in particular a Fletcher-type checksum function.

These functions can all be computed efficiently, their inverse can likewise be computed efficiently, and they provide a high probability that computational errors or data processing errors that occur in the first data channel unit and/or the second data channel unit can be detected.

According to an embodiment, the first input data comprises a first chain of input blocks, and the invertible transformation function operates iteratively on the first chain of input blocks.

The first transformed data may comprise a corresponding first chain of transformed blocks.

According to an embodiment, a transformed block among the first chain of transformed blocks depends on the preceding transformed block among the first chain of transformed blocks, in particular on a directly preceding transformed block in the first chain of transformed blocks.

A transformation function with this property may detect computational errors or data processing errors that occur in the first data channel unit and/or the second data channel unit with a high degree of certainty.

In the context of the present disclosure, the diagnosis code may be any dataset employed by the transformation function and the inverse function in computing the first transformed data and the second transformed data from the first input data and second input data, respectively, and in computing the first output data and the second output data from the first transformed data and the second transformed data, respectively.

The transformation function and the inverse function may directly employ the diagnosis code, or may employ a conversion of the diagnosis code.

According to an embodiment, the diagnosis code may serve as a starting value for the invertible transformation function and/or as a starting value for the inverse function.

The second input data may comprise a second chain of input blocks, and the invertible transformation function may operate iteratively on the second chain of input blocks.

The second transformed data may comprise a corresponding second chain of transformed blocks.

According to an embodiment, a transformed block among the second chain of transformed blocks may depend on a preceding transformed block among the second chain of transformed blocks, in particular on a directly preceding transformed block in the second chain of transformed blocks.

According to an embodiment, the first data channel unit is adapted to provide the first transformed data and the diagnosis code to the retransformation unit.

According to an embodiment, the second data channel unit is adapted to provide the second transformed data to the retransformation unit.

In an embodiment, the second data channel unit is adapted not to provide the diagnosis code to the retransformation unit.

The retransformation unit may be adapted not to receive the diagnosis code from the second data channel unit.

As a consequence, the retransformation unit may be adapted to receive the diagnosis code only from the first data channel unit. When employing the diagnosis code in the computation of the inverse function both in the conversion of the first transformed data into the first output data and in the conversion of the second transformed data into the second output data, computational errors or data processing errors that may have occurred in the first data channel unit and/or the second data channel unit, and hence may be reflected in the first transformed data or the second transformed data, respectively, may be revealed reliably.

Due to the techniques of the present disclosure, the first data channel unit and the second data channel unit may be implemented on a common industrial controller unit, and in particular may share the same central processing unit (CPU) and memory resources. Still, the gate architecture of the present disclosure and the choice of the transformation functions allows computational errors or data processing errors that may have occurred in the first data channel unit and/or the second data channel unit to be revealed with a high degree of certainty.

According to an embodiment, the retransformation unit may be implemented on the same common industrial controller unit.

According to an embodiment, the first data channel unit and/or the second data channel unit and/or the retransformation unit are not implemented on two physically and/or functionally separate industrial controller units.

However, while the possibility of implementing both the first data channel unit and the second data channel unit and the retransformation unit on the same common industrial controller unit is a particular advantage of the gate architecture and choice of transformation functions, the present disclosure is not so limited. In other embodiments, the first data channel unit and/or the second data channel unit and/or the retransformation unit are implemented on two physically and/or functionally separate industrial controller units.

In some embodiments, the first data channel unit and/or the second data channel unit and/or the retransformation unit may be implemented at least partly in hardware. In other embodiments, the first data channel unit and/or the second data channel unit and/or the retransformation unit may be implemented at least partly in software or firmware. In still further embodiments, the first data channel unit and/or the second data channel unit and/or the retransformation unit may be implemented partly in hardware and partly in software/firmware.

In a second aspect, the disclosure relates to a method for operating an industrial control system, comprising the steps of: receiving first input data and a diagnosis code in a first data channel unit; transforming the first input data into first transformed data by means of an invertible transformation function in the first data channel unit, employing the diagnosis code; receiving second input data and the diagnosis code in a second data channel unit; transforming the second input data into second transformed data by means of the invertible transformation function in the second data channel unit, employing the diagnosis code; receiving the first transformed data and the diagnosis code from the first data channel unit in a retransformation channel unit; receiving the second transformed data from the second data channel unit in the retransformation channel unit; converting the first transformed data into first output data employing an inverse function of the invertible transformation function in the retransformation channel unit, wherein the inverse function employs the diagnosis code; and converting the second transformed data into second output data employing the inverse function of the invertible transformation function in the retransformation channel unit, wherein the inverse function employs the diagnosis code.

The steps of the method according to the second aspect may be implemented in any feasible order.

According to an embodiment, the method further comprises supplying the first output data and the second output data to an industrial control network, in particular to a fieldbus network.

The method may further comprise verifying the first output data and the second output data, in particular before supplying the first output data and the second output data to the industrial control network.

According to an embodiment, the method further comprises generating merged output data from the first output data and the second output data, in particular by xor-ing the first output data and the second output data and/or by summing the first output data and the second output data.

According to an embodiment, the method may further comprise supplying the merged output data to an industrial control network, in particular to a fieldbus network.

The method may further comprise verifying the merged output data, in particular before supplying the merged output data to the industrial control network.

According to an embodiment, the invertible transformation function comprises or is an or function and/or an xor function and/or a checksum function, in particular a Fletcher-type checksum function.

The first input data may comprise a first chain of input blocks, and the invertible transformation function may operate iteratively on the first chain of input blocks.

The first transformed data may comprise a corresponding first chain of transformed blocks.

A transformed block among the first chain of transformed blocks may depend on the preceding transformed block among the first chain of transformed blocks, in particular on a directly preceding transformed block in the first chain of transformed blocks.

According to an embodiment, the diagnosis code serves as a starting value for the invertible transformation function and/or as a starting value for the inverse function.

The second input data may comprise a second chain of input blocks, and the invertible transformation function may operate iteratively on the second chain of input blocks.

According to an embodiment, the second transformed data may comprise a corresponding second chain of transformed blocks.

According to an embodiment, a transformed block among the second chain of transformed blocks depends on the preceding transformed block among the second chain of transformed blocks, in particular on a directly preceding transformed block in the second chain of transformed blocks.

The method may further comprise providing the first transformed data and the diagnosis code to the retransformation channel unit.

According to an embodiment, the method further comprises providing the second transformed data to the retransformation channel unit.

In particular, the method may comprise not providing the diagnosis code from the second data channel unit to the retransformation channel unit.

According to an embodiment, the method comprises not receiving the diagnosis code from the second data channel unit in the retransformation channel unit.

In a third aspect, the disclosure relates to a computer program or a computer program product comprising computer-readable instructions, such that the instructions, when run on an industrial controller, implement on the industrial controller the method with some or all of the features described above with reference to the first or second aspect.

Brief description of the Figures

The features and advantages of the present disclosure will become best apparent from a detailed description of embodiments with reference to the accompanying drawings, in which:

Fig. 1    illustrates an industrial control environment in which the techniques of the present disclosure may be employed;

Fig. 2    is a schematic illustration of an industrial control system according to an embodiment;

Fig. 3    is a schematic illustration of an industrial control system according to another embodiment; and

Fig. 4    is a flow diagram illustrating a method for operating an industrial control system according to an embodiment.

Description of Embodiments

Examples of a method and system for data transformation and retransformation for safety applications in an industrial control system will now be described with reference to an exemplary industrial control environment 10 that involves control of a gantry crane 12 by means of industrial control software. However, this example is merely for illustration, in general the techniques according to the present disclosure may be employed for the industrial control of any kind of industrial process, comprising but not limited to control of industrial machinery, robots, chemical fabrication processes, or light control applications.

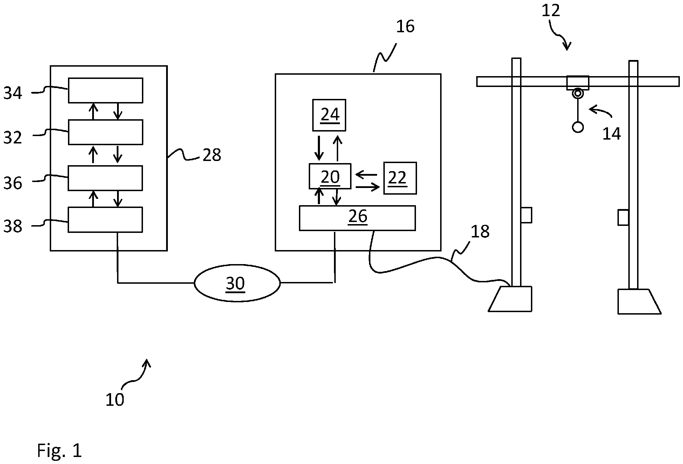

As illustrated in Figure 1, the industrial control environment 10 comprises a gantry crane 12, which may be a crane employed in a factory environment to move heavy goods in an assembly hall by means of a movable hook assembly 14.

The industrial control environment 10 further comprises an industrial control system 16 that is connected to the gantry crane 12 by means of a control line 18, such as wired or wireless connection. In some examples, the control line 18 may form part of an industrial control network, such as a fieldbus network.

The industrial control system 16 may comprise at least one industrial controller unit 20, and in some embodiments a plurality of industrial controller units (not shown in Fig. 1) that may generally be similar to the industrial controller unit 20. The industrial controller unit 20 may run an industrial control program, such as in the form of a compiled program for controlling the gantry crane 12. The industrial control system 16 may further comprise processing resources, such as at least one data processing unit 22, and memory resources, such as at least one data memory unit 24, to which the industrial controller unit(s) 20 may be connected and to which they may revert for running the industrial control program.

The industrial control system 16 of Fig. 1 further comprises a communication interface 26 that is connected to the processing unit 20 and is adapted to communicate with the gantry crane 12 via the control line 18. For instance, the industrial controller unit 20 may provide instructions to the gantry crane 12 in the form of output data for the operation of actuators to move the hook assembly 14 along a pre-determined path, wherein the output data may be provided via the communication interface 22 and the control line 18. The communication interface 22 may also receive sensor signals pertaining to an operation of the gantry crane 12 via the control line 18, and provide corresponding feedback to the industrial controller unit 20. For instance, such sensor signals may relate to sensors indicating a position of the hook assembly 14 on the gantry crane 12.

The industrial control environment 10 may further comprise a programming system 28 that is connected to the communication interface 26 via a network 30, such as a factory intranet or the Internet. For instance, the programming system 28 may comprise a desktop PC or other computing device, and may be employed by a programmer to design and generate industrial control software for the industrial control system 16, for instance in the form of an industrial control program in a high-level programming language, such as C or C++. For instance, the industrial control program may comply with the industry standard IEC 61131-3.

The programming system 28 may comprise a programming interface 32, such as a programming editor or a graphical editor that allows a programmer to generate the industrial control program in the high-level programming language. The programming system 28 may further comprise a programming memory unit 34 and a programming processor unit 36 that are connected to the programming interface 32. The programming memory unit 34 may store functions, function blocks or variables that can be employed by the programmer when generating the industrial control program. The programming processor unit 36 may provide the processing resources to run the programming interface 32 and to generate the industrial control program.

In some examples, the programming system 28 may additionally comprise a compiler unit 38 that is adapted to convert the industrial control program from the high-level programming language into a compiled industrial control program in machine code. The compiled industrial control program may then be provided to the industrial control system 16 via the network 30, and may be stored in the data memory unit 24 and may be run in the data processing unit 22 to control operation of the gantry crane 12.

In other examples, the programming system 28 provides the industrial control program to the industrial control system 16 via the network 30 in the high-level programming language, and the industrial control system 16 comprises a compiler unit (not shown) that compiles the high-level industrial control program into machine code.

In many practically relevant scenarios, the operation of the industrial control system 16 may involve safety issues. For instance, a malfunction of the industrial control system 16, such as due to a calculation error or data processing error in the industrial control system 16, such as when running the industrial control program, may translate into a malfunction of the gantry crane 12, and as a result the movement of the movable hook assembly 14 may pose a danger to the equipment or even to operating personnel in the vicinity of the gantry crane 12.

Hence, it is desirable that any such malfunction of the industrial control system is prevented, or at least detected, so that in case of such a malfunction the gantry crane 12 may be switched to a safe state. For instance, the technical norm ISO 61508 specifies a plurality of different Safety Integrity Levels (SIL) comprising different levels SIL1 to SIL4 of increasing safety requirements.

In the prior art, different approaches have been taken to address these safety requirements. For instance, the industrial control system 16 may be provided with a plurality of industrial controller units 20, for instance two industrial controller units that may operate in parallel and are each provided with their own data processing unit 22 and data memory unit 24. In this way, a redundant environment can be provided in which the control commands for the gantry crane 12 are computed in parallel and independently by each of the two industrial controller units 20. In such a redundant environment, a command for operating the gantry crane 12 may be sent via the control line 18 only if the two industrial controller units 20 come to the same result. However, this kind of redundancy involves a lot of hardware overhead.

The techniques according to the present disclosure provide more efficient ways of enhancing the safety in the industrial control environment 10 while allowing a slim architecture.

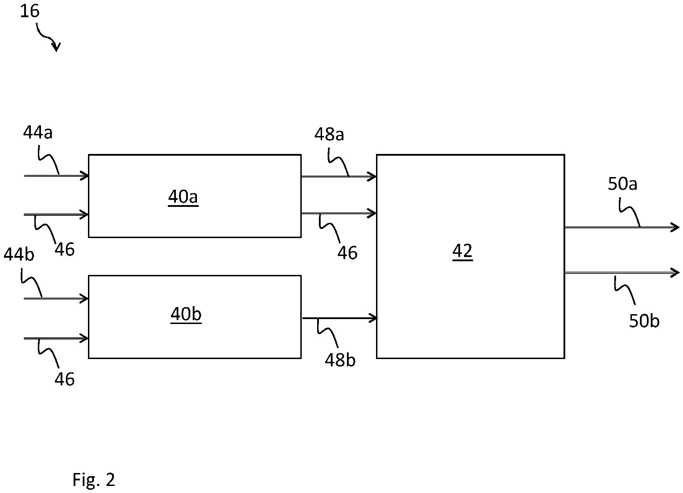

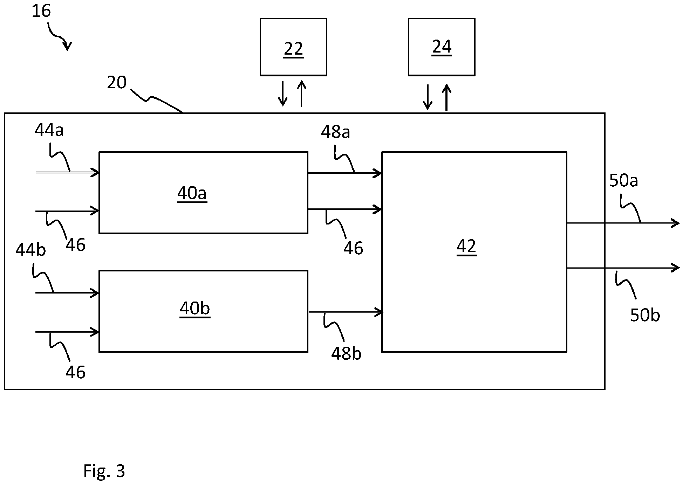

Fig. 2 schematically illustrates an industrial control system 16 according to an embodiment. The architecture of the industrial control system 16 is such that it comprises a first data channel unit 40a, a second data channel unit 40b and a retransformation unit 42. In some embodiments, both the first data channel unit 40a, the second data channel unit 40b and the retransformation unit 42 may form part of at least one industrial controller unit, such as the industrial controller unit 20, as will be explained in more detail below with reference to Fig. 3.

As illustrated in Fig. 2, the first data channel unit 40a is adapted to receive first input data 44a and a diagnosis code 46. The first data channel unit 40a is further adapted to transform the first input data 44a into first transformed data 48a by means of an invertible transformation function employing the diagnosis code 46.

The second data channel unit 40b is adapted to receive second input data 44b and the diagnosis code 46, and is further adapted to transform the second input data 44b into second transformed data 48b by means of the invertible transformation function employing the diagnosis code 46.

The retransformation unit 42 is adapted to receive the first transformed data 48a and the diagnosis code 46 from the first data channel unit 40a. The retransformation unit 42 is further adapted to receive the second transformed data 48b from the second data channel unit 40b. The retransformation unit 42 is adapted to convert the first transformed data 48a into first output data 50a employing an inverse function of the invertible transformation function, wherein the inverse function employs the diagnosis code 46. The retransformation unit 42 is further adapted convert the second transformed data 48b into second output data 50b employing the inverse function, wherein the inverse function employs the diagnosis code 46 provided by the first data channel unit 40a.

The first input data 44a may correspond to an industrial control command computed by the data processing unit 22, and similarly for the second input data 44b. For instance, each of the first input data 44a and the second input data 44b may comprise payload data, such as instructions for the movable hook assembly 14 of the gantry crane 12, as well as meta data such as protocol data and/or checksum data. The payload data of the first input data 44a and the second input data 44b may coincide, whereas the meta data may differ.

The retransformation unit 42 may receive the first transformed data 48a and the second transformed data 48b and may convert them into the first output data 50a and the second output data 50b, which, for a perfectly functioning industrial control system 16, may coincide with the first input data 44a and the second input data 44b, respectively. The industrial control system 16 may then provide the first output data 50a and the second output data 50b to the gantry crane 12, such as via the communication interface 26 and the control line 18.

The diagnosis code 46 may be any dataset, and can be pre-stored in the data memory unit 24 or computed/generated on the fly by the data processing unit 22 and supplied as input to the first data channel unit 40a and the second data channel unit 40b.

Given that the diagnosis code 46 that is employed in the computation of the inverse function is provided to the retransformation unit 42 from the first data channel unit 40a only (and in particular not from the second data channel unit 40b), the retransformation unit 42 may reveal errors in the computation or data processing of the industrial control system 16 that would otherwise go unnoticed, as will be described in further detail below.

In some embodiments, the retransformation unit 42 may be further adapted to merge the first output data 50a and the second output data 50b, such as by xor-ing the first output data 50a and the second output data 50b. The merged output data may then be provided to the gantry crane 12 via the communication interface 26 and control line 18 for control of the operation of the gantry crane 12.

As a simple illustrative example, let us assume that each of the first input data 44a and the second input data 44b is broken down into blocks of eight bits each, and that the diagnosis code 46 is likewise chosen to be an 8-bit value.

We take the transformation function to operate block wise on the first input data 44a and second input data 44b as follows:

$$\text{starting value} = \text{diagnosis code} \tag{1}$$

$$\text{diagnosis code} = i_0 \tag{2}$$

$$a_n = (i_n + 256 - i_{n-1}) \text{ MOD } 256 \tag{3}$$

where $i_n$ denotes the input data in block n (for every integer n), and $a_n$ denotes the transformed data in block n.

The retransformation unit 42 likewise operates block wise on the first transformed data 48a and second transformed data 48b, as follows:

$$\text{starting value} = \text{diagnosis code} \tag{4}$$

$$\text{diagnosis code} = o_0 \tag{5}$$

$$o_n = (a_n + o_{n-1}) \bmod 256 \tag{6}$$

where $o_n$ denotes the output data in block n.

For ease of illustration, we take an example with only six blocks of input data, as follows:

|  | $i_1$ | $i_2$ | $i_3$ | $i_4$ | $i_5$ | $i_6$ |
|---|---|---|---|---|---|---|
| first input data 44a | 110 | 0 | 113 | 0 | 120 | 0 |
| second input data 44b | 0 | 111 | 0 | 116 | 0 | 125 |

Let us further assume that the diagnosis code that serves as the starting value is 100. We then obtain for the first transformed data 48a,

|  | $a_1$ | $a_2$ | $a_3$ | $a_4$ | $a_5$ | $a_6$ |
|---|---|---|---|---|---|---|
| transformation | 110-100 | 0-110 | 113-0 | 0-113 | 120-0 | 0-120 |
| first transformed data 48a | 10 | 146 | 113 | 143 | 120 | 136 |

and similarly for the second transformed data 48b,

|  | $a_1$ | $a_2$ | $a_3$ | $a_4$ | $a_5$ | $a_6$ |
|---|---|---|---|---|---|---|
| transformation | 0-100 | 111-0 | 0-111 | 116-0 | 0-116 | 125-0 |
| second transformed data 48b | 156 | 111 | 145 | 116 | 140 | 125 |

The retransformation unit 42 then acts block wise on the first transformed data 48a to yield the output data blocks $o_n$ of the first output data 50a as follows,

|  | $o_1$ | $o_2$ | $o_3$ | $o_4$ | $o_5$ | $o_6$ |
|---|---|---|---|---|---|---|
| retransformation | 10+100 | 146+110 | 113+0 | 143+113 | 120+0 | 136+120 |
| first output data 50a | 110 | 0 | 113 | 0 | 120 | 0 |

and correspondingly on the second transformed data 48b to yield the second output data 5ob:

|  | $o_1$ | $o_2$ | $o_3$ | $o_4$ | $o_5$ | $o_6$ |
|---|---|---|---|---|---|---|
| retransformation | 156+100 | 111+0 | 145+111 | 116+0 | 140+116 | 125+0 |
| second output data 50b | 0 | 111 | 0 | 116 | 0 | 125 |

As can be taken from a comparison of the tables, $o_n = i_n$, for all integers n, and hence the first output data 50a and the second output data 50b correspond to the first input data 44a and second input data 44a, respectively.

In some embodiments, the retransformation unit 42 may then xor the first output data 50a and the second output data 50b to generate a merged output data, as follows:

| merge | 110 xor 0 | 0 xor 111 | 113 xor 0 | 0 xor 116 | 120 xor 0 | 0 xor 125 |
|---|---|---|---|---|---|---|
| merged output data | 110 | 111 | 113 | 116 | 120 | 125 |

The merged output data may be supplied to the gantry crane 12 via the communication interface 26 and control line 18 for controlled operation of the gantry crane 12.

Let us assume now for the sake of comparison that the first data channel unit 40a erroneously employs a diagnosis code of 99 instead of 100, which may be a typical data processing error in the industrial control system 16. We then obtain for the first transformed data 48a,

| | $a_1$ | $a_2$ | $a_3$ | $a_4$ | $a_5$ | $a_6$ |
|---|---|---|---|---|---|---|
| transformation | 110-99 | 0-110 | 113-0 | 0-113 | 120-0 | 0-120 |
| first transformed data 48a | 11 | 146 | 113 | 143 | 120 | 136 |

and hence a mismatch for $a_1$ whereas the other transformed data blocks remain unchanged. For the transformation in the second data channel unit 40b, there is no change compared to the healthy scenario described above, and hence:

| | $a_1$ | $a_2$ | $a_3$ | $a_4$ | $a_5$ | $a_6$ |
|---|---|---|---|---|---|---|
| transformation | 0-100 | 111-0 | 0-111 | 116-0 | 0-116 | 125-0 |
| second transformed data 48b | 156 | 111 | 145 | 116 | 140 | 125 |

The retransformation unit 42 obtains the diagnosis code 46 from the first data channel unit 40a, and hence computes the output blocks $o_n$ of the first output data 50a with the (erroneous) starting value 99, as follows:

| | $O_1$ | $O_2$ | $O_3$ | $O_4$ | $O_5$ | $O_6$ |
|---|---|---|---|---|---|---|
| retransformation | 11+99 | 146+110 | 113+0 | 143+113 | 120+0 | 136+120 |
| first output data 50a | 110 | 0 | 113 | 0 | 120 | 0 |

and correspondingly on the second transformed data 48b:

| | $O_1$ | $O_2$ | $O_3$ | $O_4$ | $O_5$ | $O_6$ |
|---|---|---|---|---|---|---|
| retransformation | 156+99 | 111+255 | 145+110 | 116+255 | 140+115 | 125+255 |
| second output data 50b | 255 | 110 | 255 | 115 | 255 | 124 |

Hence, while the first output data 50a are reproduced faithfully instead of the erroneous diagnosis code 46, the second output data 50b are distorted, which translates into the merged output as follows:

| merge | 110 xor 255 | 0 xor 110 | 113 xor 255 | 0 xor 115 | 120 xor 255 | 0 xor 124 |
|---|---|---|---|---|---|---|
| merged output data | 145 | 10 | 142 | 115 | 135 | 124 |

The merged output data is likewise distorted, and may no longer correspond to a valid fieldbus command. This may be verified by the retransformation unit 42 or in the fieldbus network 18, and as a result the industrial control environment may be switched into a safe state.

As another example, let us consider a calculation error in the calculation of one of the transformed blocks in the first data channel unit 40a, as follows:

| | $a_1$ | $a_2$ | $a_3$ | $a_4$ | $a_5$ | $a_6$ |
|---|---|---|---|---|---|---|
| transformation | 110-100 | 0-110 | 113-0 | 0-113 | 120-0 | 0-120 |

(continued)

|  | a₁ | a₂ | a₃ | a₄ | a₅ | a₆ |
|---|---|---|---|---|---|---|
| first transformed data 48a | 10 | 146 | 113 | 143 -> 145 | 120 | 136 |

In contrast, the transformed blocks for the second data channel unit 40b are computed correctly and remain unchanged:

|  | a₁ | a₂ | a₃ | a₄ | a₅ | a₆ |
|---|---|---|---|---|---|---|
| transformation | 0-100 | 111-0 | 0-111 | 116-0 | 0-116 | 125-0 |
| second transformed data 48b | 156 | 111 | 145 | 116 | 140 | 125 |

Given the error in the fourth block of the first transformed data, the retransformation of the first transformed data 48a proceeds as follows:

|  | O₁ | O₂ | O₃ | O₄ | O₅ | O₆ |
|---|---|---|---|---|---|---|
| retransformation | 10+100 | 146+110 | 113+0 | 145+113 | 120+2 | 136+122 |
| first output data 50a | 110 | 0 | 113 | 2 | 122 | 2 |

and hence errors occur in all blocks n > 3 of the first output data 50a. In contrast, the second transformed data 48b is retransformed correctly to yield the second output data 50b:

|  | O₁ | O₂ | O₃ | O₄ | O₅ | O₆ |
|---|---|---|---|---|---|---|
| retransformation | 156+100 | 111+0 | 145+111 | 116+0 | 140+116 | 125+0 |
| second output data 50b | 0 | 111 | 0 | 116 | 0 | 125 |

The output data merge of the first output data 50a and the second output data 50b then yields:

| merge | 110 xor 0 | 0 xor 111 | 113 xor 0 | 2 xor 116 | 122 xor 0 | 2 xor 125 |
|---|---|---|---|---|---|---|
| merged output data | 110 | 111 | 113 | 118 | 122 | 127 |

As a result, the merged output data is likewise incorrect for all blocks n > 3, and may no longer correspond to a valid fieldbus command. This may be verified by the retransformation unit 42 or in the fieldbus network 18, and as a result the industrial control environment may again be switched into a safe state.

In the context of the present disclosure, various transformation functions may be used. In general, any invertible transformation function may be suitable for embodiments of the present disclosure. Particularly useful transformation functions may comprise symmetric cryptographic operations, such as a blowfish algorithm or an xor algorithm.

In a blowfish algorithm, the input data may be encrypted and decrypted symmetrically, wherein the diagnosis code may serve as a key. In an xor algorithm, the blocks of input data may be xor-ed with the diagnosis code.

In other embodiments, a Fletcher checksum algorithm may be employed to transform the first input data 44a and the second input data 44b block wise and iteratively, such as a Fletcher-96 algorithm or variants thereof.

As an example, consider a variant of Fletcher's algorithm with three checksum values, each being divided into blocks of 32 bits:

$$a_j = (a_{j-1} + i_j)\ \text{MOD}\ 2^{32} \qquad\qquad (7)$$

$$b_j = (b_{j-1} + a_j)\ \text{MOD}\ 2^{32} \qquad\qquad (8)$$

$$c_j = (c_{j-1} + b_j) \text{ MOD } 2^{32} \tag{9}$$

$$\text{checksum} = (c_{n-1} << 64) \mid (b_{n-1} << 32) \mid a_{n-1} \tag{10}$$

where $i_j$ denotes the input data of block j, and $a_j$, $b_j$, $c_j$ are computed block wise and iteratively and denote the three parts of the checksum, while $<< x$ denotes a bitwise left shift by x. The start value $(i_0, a_0, b_0)$ may be chosen as the diagnosis code.

The modulo $2^{32}$ makes this algorithm more performant compared to modulo 255 (as in the original Fletcher algorithm), in particular given that 0x00 and 0xFF no longer have identical checksums.

This transformation is invertible, as shown here for the a part: Making use of the following relation for the modulo,

$$y = x \text{ MOD } z \tag{11}$$

$$x = y + g * z \text{ for integer } g \tag{12}$$

and assuming $a_0 = 0$, we obtain (j > 0):

$$a_j = (a_{j-1} + i_j) \text{ MOD } 2^{32} \tag{13}$$

$$a_{j-1} + i_j = a_j + g * 2^{32} \tag{14}$$

$$i_j = a_j - a_{j-1} + g * 2^{32} \tag{15}$$

$$g = 1 \text{ for } a_j < a_{j-1} \tag{16}$$

$$g = 0 \text{ for } a_j >= a_{j-1} \tag{17}$$

Hence, for each $a_j$ there exists exactly one value for g. Thus, the transformation is bijective and uniquely invertible. The inverse transformation can be obtained as follows, where again the start value $(i_0, a_0, b_0)$ may be chosen as the diagnosis code:

$$b'_j = (c_j + b'_{j-1}) \text{ MOD } 2^{32} \tag{18}$$

$$a'_j = (b'_j + a'_{j-1}) \text{ MOD } 2^{32} \tag{19}$$

$$o_j = (a'_j + o_{j-1}) \text{ MOD } 2^{32} \tag{20}$$

where $o_j$ denotes the output data in block j.

For illustration of the modified Fletcher algorithm described above, consider again input data divided into six blocks, and assume a starting value $i_0 = o_0$, $a_0 = a'_0$, $b_0 = b'_0$) corresponding to the diagnosis code (100, 200, 300). We then obtain:

| j | 0 | 1 | 2 | 3 | 4 | 5 | 6 |
|------|------|------|------|------|------|------|------|
| $i_j$ | 100 | 110 | 111 | 113 | 115 | 120 | 125 |
| $a_j$ | 200 | 10 | 1 | 2 | 2 | 5 | 5 |
| $b_j$ | 300 | 66 | 247 | 1 | 0 | 3 | 0 |
| $c_j$ | | 22 | 181 | 10 | 255 | 3 | 253 |
| $b'_j$ | 300 | 66 | 247 | 1 | 0 | 3 | 0 |

(continued)

| a'$_j$ | 200 | 10 | 1 | 2 | 2 | 5 | 5 |
|---|---|---|---|---|---|---|---|
| o$_j$ | 100 | 110 | 111 | 113 | 115 | 120 | 125 |

As can be seen from the above table, indeed $o_j = i_j$ for each block j = 1,...,6, and hence the retransformation in the retransformation unit reproduces the input data.

Given that the Fletcher algorithm iteratively computes the checksum for a given block based on the checksum component of the previous blocks, errors in the computation or data handling are propagated across the entire computation cycles. This allows errors to be reliably detected.

The residual error R denotes the number of input values that lead to the same checksum. In case the input data values are assumed to be uniformly distributed, each of the checksums as well as its parts a, b, and c are likewise uniformly distributed. Under this assumption, the residual error R can be estimated as

$$R = (2^w * n)/(2^m) \qquad (21)$$

where w denotes the bit with of the blocks and n denotes the number of blocks in the input data and m denotes the bit width of the checksum. The residual error probability P denotes the total number of residual errors divided by the buffer size n * $2^w$,

$$P = ((2^w * n)/2^m) / (n * 2^w) = 2^{-m} \qquad (22)$$

which decreases exponentially with increasing bit width m of the checksum.

Assuming m = 96 in the modified Fletcher algorithm as described above, we have P = $2^{-96}$ = 1,26218 * $10^{-29}$. In other words, a data consistency check performed either by the retransformation unit 42 or the fieldbus network 18 will detect errors with a diagnostic coverage (DC) of 1-P = 1 - 1,26218 * $10^{-29}$, and hence with a very high degree of reliability.

The techniques of the present disclosure thereby allow the first data channel unit 40a and the second data channel unit 40b to be implemented on one and the same industrial controller unit 20, in particular making use of the same data processing unit 22 and data memory unit 24, while still allowing any computational and data processing errors to be detected with a very high diagnostic coverage DC. A corresponding embodiment is schematically illustrated in Fig. 3.

However, the disclosure is not so limited, and in other embodiments the first data channel unit 40a and the second data channel unit 40b may be implemented in two physically and spatially separated industrial controller units 20, which may each comprise their own data processing unit 22 and the data memory unit 24.

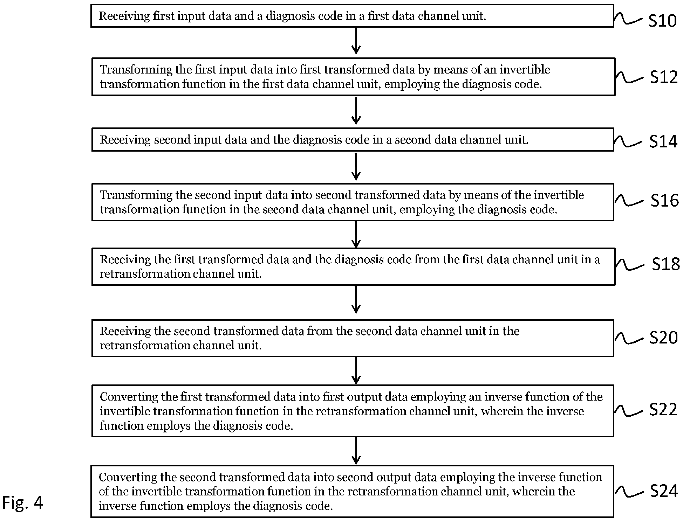

Fig. 4 is a flow diagram illustrating a method for operating an industrial control system, such as the industrial control system 16 as described above with reference to Figures 1 to 3.

In a first step S10, first input data and a diagnosis code are received in a first data channel unit.

In a second step S12, the first input data is transformed into first transformed data by means of an invertible transformation function in the first data channel unit, employing the diagnosis code.

In a third step S14, second input data and the diagnosis code are received in a second data channel unit.

In a fourth step S16, the second input data is transformed into second transformed data by means of the invertible transformation function in the second data channel unit, employing the diagnosis code.

In a fifth step S18, the first transformed data and the diagnosis code are received from the first data channel unit in a retransformation channel unit.

In a sixth step S20, the second transformed data is received from the second data channel unit in the retransformation channel unit.

In a seventh step S22, the first transformed data is converted into first output data employing an inverse function of the invertible transformation function in the retransformation channel unit, wherein the inverse function employs the diagnosis code.

In an eighth step S24, the second transformed data is converted into second output data employing the inverse function of the invertible transformation function in the retransformation channel unit, wherein the inverse function employs the diagnosis code.

While the flow diagram of Fig. 4 shows the method steps S10 to S24 in a certain (time) order, it will be appreciated that embodiments of the method are not limited to the shown (time) order. Rather, the method steps can generally be executed in any temporal order. For instance, the step S14 of receiving the second input data and the diagnosis code in the second data channel unit may be implemented before or after the step S12 of transforming the first input data into first transformed data by means of an invertible transformation function the first data channel unit. Similarly, the step S22 of converting the first transformed data into first output data employing an inverse function of the invertible transformation function in the retransformation channel unit may be implemented before or after the step S20 of receiving the second transformed data from the second channel unit in the retransformation channel unit.

The description of the embodiments and the Figures merely serve to illustrate the techniques of the present disclosure and some advantages associated therewith, but should not be misunderstood to imply any limitation. The scope of the disclosure is to be determined from the appended claims.

Reference signs

| | |
|---|---|
| 10 | industrial control environment |
| 12 | gantry crane |
| 14 | movable hook assembly |
| 16 | industrial control system |
| 18 | control line, industrial control network |
| 20 | industrial controller unit |
| 22 | data processing unit |
| 24 | data memory unit |
| 26 | communication interface |
| 28 | programming system |
| 30 | network |
| 32 | programming interface |
| 34 | programming memory unit |
| 36 | programming processor unit |
| 38 | compiler unit |
| 40a | first data channel unit of industrial control system 16 |
| 40b | second data channel unit of industrial control system 16 |
| 42 | retransformation unit |
| 44a | first input data |
| 44b | second input data |
| 46 | diagnosis code |
| 48a | first transformed data |
| 48b | second transformed data |
| 50a | first output data |
| 50b | second output data |

**Claims**

1. An industrial control system (16), comprising:

   a first data channel unit (40a), the first data channel unit (40a) being adapted to receive first input data (44a) and a diagnosis code (46), and further adapted to transform the first input data (44a) into first transformed data (48a) by means of an invertible transformation function employing the diagnosis code (46);
   a second data channel unit (40b), the second data channel unit (40b) being adapted to receive second input data (44b) and the diagnosis code (46), and further adapted to transform the second input data (44b) into second transformed data (48b) by means of the invertible transformation function employing the diagnosis code (46); and
   a retransformation unit (42), the retransformation unit (42) being adapted to receive the first transformed data (48a) and the diagnosis code (46) from the first data channel unit (44a), and further adapted to receive the second transformed data (48b) from the second data channel unit (44b);
   wherein the retransformation unit (42) is adapted to convert the first transformed data (48a) into first output data (50a) employing an inverse function of the invertible transformation function, wherein the inverse function employs the diagnosis code (46); and
   wherein the retransformation unit (42) is adapted to convert the second transformed data (48b) into second output data (50b) employing the inverse function, wherein the inverse function employs the diagnosis code (46).

2. The industrial control system (16) according to claim 1, wherein the retransformation unit (42) is adapted to supply the first output data (50a) and the second output data (50b) to an industrial control network (18), in particular to a fieldbus network.

3. The industrial control system (16) according to claim 1 or 2, wherein the retransformation unit (42) is adapted to generate merged output data from the first output data (50a) and the second output data (50b), in particular by xor-ing the first output data (50a) and the second output data (50b).

4. The industrial control system (16) according to claim 3, wherein the retransformation unit (42) is adapted to supply the merged output data to an industrial control network (18), in particular to a fieldbus network.

5. The industrial control system (16) according to any one of the preceding claims, wherein the invertible transformation function comprises an or function and/or an xor function and/or a checksum function, in particular a Fletcher-type checksum function.

6. The industrial control system (16) according to any one of the preceding claims, wherein the retransformation unit (42) is adapted not to receive the diagnosis code (46) from the second data channel unit (40b).

7. The industrial control system (16) according to any one of the preceding claims, wherein the first data channel unit (40a) and the second data channel unit (40b) are implemented on a common industrial controller unit.

8. A method for operating an industrial control system (16), comprising:

receiving first input data (44a) and a diagnosis code (46) in a first data channel unit (40a);
transforming the first input data (44a) into first transformed data (48a) by means of an invertible transformation function in the first data channel unit (40a), employing the diagnosis code (46);
receiving second input data (44b) and the diagnosis code (46) in a second data channel unit (40b);
transforming the second input data (44b) into second transformed data (48b) by means of the invertible transformation function in the second data channel unit (40b), employing the diagnosis code (46);
receiving the first transformed data (48a) and the diagnosis code (46) from the first data channel unit (42) in a retransformation channel unit (46);
receiving the second transformed data (48b) from the second data channel unit (40b) in the retransformation channel unit (42);
converting the first transformed data (48a) into first output data (50a) employing an inverse function of the invertible transformation function in the retransformation channel unit (42), wherein the inverse function employs the diagnosis code (46); and
converting the second transformed data (48b) into second output data (50b) employing the inverse function of the invertible transformation function in the retransformation channel unit (42), wherein the inverse function employs the diagnosis code (46).

9. The method according to claim 8, further comprising supplying the first output data (50a) and the second output data (50b) to an industrial control network (18), in particular to a fieldbus network.

10. The method according to claim 8 or 9, further comprising generating merged output data from the first output data (50a) and the second output data (50b), in particular by xor-ing the first output data (50a) and the second output data (50b).

11. The method according to claim 10, further comprising supplying the merged output data to an industrial control network (18), in particular to a fieldbus network.

12. The method according to any one of the claims 8 to 11, wherein the invertible transformation function comprises an or function and/or an xor function and/or a checksum function, in particular a Fletcher-type checksum function.

13. The method according to any one of the claims 8 to 12, wherein the first input data (44a) and/or the second input data (44b) comprises a chain of input blocks, and the invertible transformation function operates iteratively on the chain of input blocks.

14. The method according to any one of the claims 8 to 13, wherein the diagnosis code (46) serves as a starting value for the invertible transformation function and/or as a starting value for the inverse function.

**15.** A computer program or computer program product comprising computer-readable instructions, such that the instructions, when run on an industrial controller, implement on the industrial controller the method according to any one of the claims 8 to 14.

Fig. 1

Fig. 2

Fig. 3

Receiving first input data and a diagnosis code in a first data channel unit. ⟿ S10

↓

Transforming the first input data into first transformed data by means of an invertible transformation function in the first data channel unit, employing the diagnosis code. ⟿ S12

↓

Receiving second input data and the diagnosis code in a second data channel unit. ⟿ S14

↓

Transforming the second input data into second transformed data by means of the invertible transformation function in the second data channel unit, employing the diagnosis code. ⟿ S16

↓

Receiving the first transformed data and the diagnosis code from the first data channel unit in a retransformation channel unit. ⟿ S18

↓

Receiving the second transformed data from the second data channel unit in the retransformation channel unit. ⟿ S20

↓

Converting the first transformed data into first output data employing an inverse function of the invertible transformation function in the retransformation channel unit, wherein the inverse function employs the diagnosis code. ⟿ S22

↓

Converting the second transformed data into second output data employing the inverse function of the invertible transformation function in the retransformation channel unit, wherein the inverse function employs the diagnosis code. ⟿ S24

Fig. 4

Europäisches
Patentamt

European
Patent Office

Office européen
des brevets

# EUROPEAN SEARCH REPORT

**Application Number**

EP 24 15 9178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 556 805 A2 (HITACHI LTD [JP]) 25 August 1993 (1993-08-25) * page 2, line 3 - page 5, line 43; figures 1-3 * ----- | 1-15 | INV. G05B19/042 G05B9/03 |
| A | US 2021/278816 A1 (SCHWEIKER MATTHIAS [DE] ET AL) 9 September 2021 (2021-09-09) * the whole document * ----- | 1,8,15 | |

**TECHNICAL FIELDS SEARCHED (IPC)**

H04L
G05B

The present search report has been drawn up for all claims

| Place of search | Date of completion of the search | Examiner |
|---|---|---|
| Munich | 15 July 2024 | Postemer, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                         
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 9178

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2024

| Patent document cited in search report | | Publication date | Patent family member(s) | | Publication date |
|---|---|---|---|---|---|
| EP 0556805 | A2 | 25-08-1993 | EP | 0556805 A2 | 25-08-1993 |
| | | | JP | H05233344 A | 10-09-1993 |
| US 2021278816 | A1 | 09-09-2021 | CN | 112740122 A | 30-04-2021 |
| | | | DE | 102018120347 A1 | 27-02-2020 |
| | | | EP | 3841438 A1 | 30-06-2021 |
| | | | JP | 7202448 B2 | 11-01-2023 |
| | | | JP | 2021534508 A | 09-12-2021 |
| | | | US | 2021278816 A1 | 09-09-2021 |
| | | | WO | 2020038626 A1 | 27-02-2020 |

EPO FORM P0459

For more details about this annex : see Official Journal of the European Patent Office, No. 12/82

**EP 4 607 298 A1**

## REFERENCES CITED IN THE DESCRIPTION

### Patent documents cited in the description

• EP 4242847 A2